# EUROPÄISCHE PATENTSCHRIFT

(11) **EP 3 153 488 B1**
(45) Veröffentlichungstag und Bekanntmachung des Hinweises auf die Patenterteilung: **01.04.2020**
(21) Anmeldenummer: 15188583.7
(22) Anmeldetag: 06.10.2015
(51) Int. Cl.: C05C 9/02, C05G 3/00

(54) **DÜNGEMITTELKORN, VERFAHREN UND VORRICHTUNG ZUM HERSTELLEN EINES DÜNGEMITTELKORNS**
FERTILIZER GRAIN, METHOD AND DEVICE FOR PRODUCING A FERTILIZER GRAIN
GRANULES D'ENGRAIS, PROCEDE ET DISPOSITIF DESTINES A FABRIQUER UNE GRANULE D'ENGRAIS

(43) Veröffentlichungstag der Anmeldung: 12.04.2017
(73) Patentinhaber: ChemCom Industries B.V., 9930 AC Delzijl (NL); Schneider-Planta Chemicals GmbH, 66571 Eppelborn-Dirmingen (DE)
(72) Erfinder: BASTIAENSEN, Erik, 9930 AC Delfzijl (NL); SCHNEIDER, Detlef, 66571 Eppelborn (DE); PLANTA, Ulrike, 66571 Eppelborn (DE)
(74) Vertreter: Wunderlich & Heim Patentanwälte Partnerschaftsgesellschaft mbB

(56) Entgegenhaltungen:
- EP-A1- 0 289 074
- EP-A1- 0 628 527
- WO-A1-01/42170
- WO-A1-2013/030118
- FR-A1- 2 366 055
- GB-A- 954 555
- GB-A- 1 287 749
- US-A- 3 223 518

## Beschreibung

Die Erfindung betrifft ein Düngemittelkorn gemäß Anspruch 1 und ein Verfahren zum Herstellen von Düngemittelkörnern gemäß Anspruch 4.

Düngemittel in fester Form werden bevorzugt bei Applikationen mit Langzeitwirkung eingesetzt. Hierdurch soll eine Nährstoffversorgung von Pflanzen über einen längeren Zeitraum hinweg ohne weitere Arbeitsschritte nach dem Ausbringen des Düngemittels sichergestellt werden. Grundsätzlich ist es zweckmäßig, eine Düngemittelgabe an die Nähstoffbedürfnisse der Pflanze anzupassen, was auch einer Überdüngung des Bodens vorbeugen kann.

Aus der US 4,019,890 ist es bekannt, Düngemittelgranulatkörner mit einer wasserfesten Polymerschicht zu versehen, durch welche das Düngemittel an den Boden diffundierend abgegeben werden kann. Zwar kann auf diese Weise eine kontrollierte Düngemittelgabe bereitgestellt werden. Diese ist jedoch zum einen durch die Porosität der Hüllschicht beschränkt und zum anderen in etwa gleichbleibend über den Anwendungszeitraum hinweg. Somit kann ein Düngemittel, welches mit einer solchen Hüllschicht umgeben ist, weder eine kontrolliert steigende noch eine abfallende Nährstoffabgabe an den Boden ermöglichen.

Die WO 2013/030 118 A1 betrifft eine Vorrichtung zum Umhüllen von Düngemittelkörnern mit verschiedenen Schichten, enthaltend einen Fließbettgranulator.

Die WO 01/42170 A1 offenbart eine Calziumcyanamid-Zusammensetzung mit kontrollierte Freisetzung, welche in Form von Düngemittelkörnern bereitgestellt wird, wobei zumindest ein Kern und mehrere Schichten vorgesehen sind und zumindest einzelne Schichten mit einem Anteil an Formaldehyd und Harnstoff gebildet sein können.

Aus der EP 0 628 527 A1 geht ein Düngemittel hervor, welches einen Kern und zumindest zwei Schichten aufweist, welche den Kern umgeben. Hierbei ist der Kern mit einem wasserlöslichen Reagenz versehen, welches durch zumindest die erste Schicht aus dem Düngemittelkorn austreten soll. Die erste Schicht ist von einer zweiten thermoplastischen Schicht überzogen, die die erste Schicht und den Kern einkapselt.

Die GB 954 555 A offenbart Düngemittelkörner, welche zumindest von einer gehärteten Schutzschicht umgeben sind, welche das Verbacken der Düngemittelkörner verhindern soll. Zumindest eine der Schichten kann hierbei eine Formaldehyd-Harnstoffkomposition aufweisen. Die Düngemittelkörner werden mit einem Kunstharz behandelt, welches als filmartiger, wasserbeständiger Überzug vorgesehen ist. Der Überzug kann aus einem schwer schmelzenden Kunstharz bestehen, welcher in mehreren dünnen filmartigen Schichten auf dem Düngemittelkorn durch Versprühen aufgebracht wird.

Aus der US 3 223 518 A D5 geht die Herstellung von Düngemittelkörnern hervor, welche zumindest einen Kern und eine erste und eine zweite Schicht aufweisen können. Zumindest die erste Schicht kann auch mit Formaldehyd-Harnstoff gebildet sein.

Die FR 2 366 055 A1 betrifft ein Verfahren zur Herstellung von staubfreien und nichtbackenden Granulaten aus Düngemitteln und Salzen.

Die GB 1 287 749 A offenbart Düngemittelkörner, welche zumindest mit einem Kern und einer Methylen-Harnstoffschicht gebildet sind. Grundsätzlich können Düngemittelkörner auch mehrere dieser Schichten aufweisen.

Der Erfindung liegt die **Aufgabe** zugrunde, ein Düngemittelkorn anzugeben, welches eine bedarfsgerechte Nährstoffabgabe im Boden ermöglicht. Weiterhin liegt der Erfindung die Aufgabe zugrunde, ein Verfahren zum Herstellen eines solchen Düngemittelkorns anzugeben.

Die Aufgabe wird nach der Erfindung einerseits durch ein Düngemittelkorn mit den Merkmalen des Anspruchs 1 und andererseits durch ein Verfahren zum Herstellen von Düngemittelkörnern mit den Merkmalen des Anspruchs 4 gelöst. Bevorzugte Ausführungsformen sind in den jeweils abhängigen Ansprüchen angegeben.

Das erfindungsgemäße Düngemittelkorn ist dadurch gekennzeichnet, dass es einen Schichtaufbau mit mindestens zwei Schichten aufweist, von denen zumindest eine erste Schicht und zumindest eine zweite Schicht mit Methylenharnstoff gebildet sind, wobei die erste Schicht eine erste Porosität und die zweite Schicht eine zweite Porosität aufweist und die erste Porosität unterschiedlich zu der zweiten Porosität ist.

Weiterhin ist das erfindungsgemäße Verfahren zum Herstellen von Düngemittelkörnern dadurch gekennzeichnet, dass ein Schichtaufbau der Körner mit mindestens zwei Schichten erzeugt wird, von dem mindestens einen erste Schicht und zumindest eine zweite Schicht mit Methylenharnstoff gebildet werden, wobei die erste Schicht mit einer ersten Porosität und die zweite Schicht mit einer zweiten Porosität gebildet wird, wobei die erste Porosität unterschiedlich zu der zweiten Porosität vorgesehen wird.

Bei einer Vorrichtung zum Herstellen von Düngemittelkörnern ist vorgesehen, dass sie mindestens einen Granulator aufweist.

Ein Grundgedanke der Erfindung liegt darin, ein Düngemittelkorn bereitzustellen, welches Schichten mit einem Anteil an Düngemittel aufweist, welche mit unterschiedlichen Porositäten gebildet sind. Die unterschiedlichen Porositäten der Schicht des Düngemittelkorns erlauben die Abgabe von Nährstoffen aus dem Korn mit einem individuell einstellbaren Nährstoffabgabeprofil. Ein solches Düngemittelkorn gibt die Nährstoffe einer ersten Schicht an den umgebenden Boden mit mindestens einer ersten Geschwindigkeit und einer zweiten Schicht mit mindestens einer zweiten Geschwindigkeit ab.

Ein weiterer Grundgedanke der Erfindung besteht darin, ein Düngemittelkorn zu bilden, welches ein einstellbares Nährstoffabgabeprofil mit mindestens zwei unterschiedlichen Nährstoffabgabegeschwindigkeiten bei der Anwendung aufweist, wobei die Nährstoffabgabegeschwindigkeiten durch mindestens eine erste beziehungsweise eine zweite Nährstoff-abgebende Schicht des Düngemittelkorns unterschiedlicher Porosität bereitgestellt sind.

Ein solches Düngemittelkorn kann selbst ohne zusätzliche Kontroll- und/oder Hüllschichten eine Abgabe von Nährstoffen in definierter Weise ermöglichen. Unter Hüll- und/oder Kontrollschichten sind insbesondere solche Filme oder Ummantelungen zu verstehen, welche keinen Anteil an Düngemittel aufweisen und dadurch die Abgabe von Düngemittel aus dem Korn verzögern und/oder die Abgabe von Nährstoffen aus dem Korn, beispielsweise durch Diffusionskontrolle, beeinflussen sollen. Das Düngemittel wäre in einem solchen Düngemittelkorn insbesondere in einem tieferliegenden Bereich oder Schicht des Düngemittelkorns bevorratet als die Hüll- und/oder Kontrollschicht selbst.

Methylenharnstoff kann grundsätzlich als Düngemittel verwendet werden, aus welchem insbesondere stickstoffhaltige Düngemittelkomponenten, beispielsweise durch mikrobiellen Abbau oder Auswaschen beziehungsweise Auflösen, freigegeben werden können.

Nach einer Weiterbildung der Erfindung ist es zweckmäßig, dass ein Kern vorgesehen ist, um welchen die Schichten im Wesentlichen sphärisch angeordnet sind. Der Kern selbst kann aus einem Methylenharnstoff aufweisenden Material gebildet sein. Weiterhin kann der Kern ebenfalls eine Schichtstruktur mit mindestens zwei der Schichten aufweisen oder alternativ einstückig ausgebildet sein. Es ist insbesondere dann eine sphärische Anordnung gebildet, wenn eine weiter außen liegende Schicht des Düngemittelkorns eine weiter innen liegende Schicht und/oder den Kern zumindest zu 51%, bevorzugt zu mindestens 75%, besonders bevorzugt zu mindestens 95%, umgibt. Bei den außen beziehungsweise innenliegenden Schichten kann es sich insbesondere um die erste beziehungsweise zweite Schicht handeln. Ebenfalls ist nach der Weiterbildung der Erfindung eine sphärische Anordnung gemeint, wenn die besagte Schicht das darunter befindliche, innen liegende Düngemittelkorn vollständig umschließt.

Erfindungsgemäß ist es vorgesehen, dass zumindest zwei der Schichten mit der gleichen stofflichen Zusammensetzung, jedoch mit unterschiedlicher Porosität gebildet sind. Somit können Schichten des Düngemittelkorns zwar von ihren Bestandteilen her eine identisch chemische Zusammensetzung aufweisen, sich dennoch strukturell, also in ihrem räumlichen beziehungsweise makromolekularen Aufbau unterscheiden. Schichten im Düngemittelkorn unterschiedlichen strukturellen Aufbaus, insbesondere unterschiedlicher Porosität, können insbesondere eine unterschiedliche Dichte aufweisen.

Eine besonders vorteilhafte Weiterbildung der Erfindung besteht darin, dass eine äußere Schicht eine geringere Porosität aufweist als eine innere Schicht. Schichten geringer Porosität können eine besondere Härte aufweisen. Dies kann insbesondere hinsichtlich der Lagerfähigkeit sowie der Neigung des Düngemittelkorns zur Staubbildung relevant sein. Die äußere Schicht kann ebenfalls mit einem Anteil an Methylenharnstoff gebildet sein. Die besondere Härte einer solchen äußeren Schicht kann insbesondere eine besonders geringe Hygroskopie des Düngemittelkorns begünstigen sowie einem besonders geringen Material-Abrieb während der Herstellung, Lagerung und Verwendung des Düngemittelkorns zuträglich sein. Eine Schicht mit geringer Porosität, insbesondere eine derartige äußere Schicht, kann sich durch eine besonders glatte Oberfläche im Vergleich zu Schichten mit höherer Porosität unterscheiden.

Eine besonders vorteilhafte Ausführung des erfindungsgemäßen Verfahrens besteht darin, dass die Düngemittelkörner mit einem Kern gebildet werden, um welchen die Schichten im Wesentlichen sphärisch angeordnet werden. Die Schichten können insbesondere auf der Oberfläche des darunter befindlichen Kerns und/oder auf einer bereits auf dem Kern aufgetragenen Schicht mit einer gleichmäßigen Dicke vorgesehen werden. Somit können Düngemittelkörner bereitgestellt werden, welche beispielsweise sequenziell Nährstoffe Schicht für Schicht nach einem Abgabeprofil an den Boden abgeben, welches für eine Vielzahl von Körnern gleich, zumindest jedoch ähnlich sein kann. Eine obere Schicht, also eine außenliegende beziehungsweise äußere Schicht kann beispielsweise mikrobiell abgebaut und eine darunter befindliche innere beziehungsweise tieferliegende Schicht der Körner freigelegt werden. So können Düngemittelbestandteile an den Boden abgegeben werden. Sind die Nährstoffe einer äußeren Schicht an den Boden abgegeben, ist die Schicht des Düngemittelkorns weitestgehend abgebaut beziehungsweise aufgelöst. Diese äußere Schicht ist dann nicht mehr Bestandteil des Düngemittelkorns. Ein Feuchtigkeitsanteil im das Korn umgebenden Boden kann ein sukzessives Auflösen der Körner begünstigen. Eine innere Schicht wird also zur äußeren Schicht beim nährstoff-freigebenden Abbau des Korns im Boden. Diese neue äußere Schicht kann dieselbe oder eine andere Porosität sowie Düngemitteleigenschaften wie die vorherige obere Schicht aufweisen und somit einen nächsten Abschnitt in einer Nährstoffversorgungssequenz bereitstellen. Ein solches sich zeitlich veränderndes Nährstoff-Abgabeprofil kann insbesondere durch die jeweils obere Schicht des Düngemittelkorns bestimmt, zumindest jedoch beeinflusst werden. Der Übergang zwischen einzelnen Abschnitten kann insbesondere fließend sein, wobei eine tieferliegende Schicht bereits Nährstoffe abgeben kann, während eine darüber liegende obere Schicht noch nicht vollständig verbraucht beziehungsweise abgebaut und/oder aufgelöst ist. Tieferliegende innere Schichten können je nach Schichtdickte, Zusammensetzung und/oder Porosität von darüber liegenden Schichten, insbesondere der oberen Schicht ebenfalls einen Einfluss auf das Abgabeprofil haben und bereits Nährstoffe an einen Bode abgeben bevor die Düngemittel abgebende innere Schicht zur oberen Schicht wird.

Eine Ausführungsform der Erfindung besteht darin, dass die Schichten aus unterschiedlichen methylenharnstoffhaltigen Zubereitungen gebildet werden. Die einzelnen Schichten eines Düngemittelkorns können mit weiteren Eigenschaften und/oder Hilfsstoffen versehen werden. Insbesondere können die Schichten aus methylenhaltigen Zubereitungen unterschiedlicher Konzentration gebildet werden. Die Hilfsstoffe können insbesondere stickstoff-, phosphor- und/oder kaliumhaltige Substanzen, Mineralstoffe, Bindemittel, Bentonit, Leonardit, Spurenelemente, sonstige Pflanzennährstoffe, Pflanzenschutzmittel, Bodenverbesserer, Mikroorganismen, Pheromone oder eine Kombination dieser aufweisen.

Eine besonders bevorzugte Ausführungsform der Erfindung besteht darin, dass zumindest die erste Schicht und zumindest die zweite Schicht aus methylenharnstoffhaltigen Zubereitungen der gleichen stofflichen Zusammensetzung gebildet werden, und dass die unterschiedliche Porosität durch eine unterschiedliche Temperatureinstellung beim Beschichten bewirkt wird. Die Variation der Temperatur, insbesondere der Zubereitung, kann einen Einfluss auf Bestandteile der Zubereitung haben. Insbesondere kann hierdurch die Löslichkeit von Bestandteilen der Zubereitung Änderungen unterworfen sein. Somit können Bestandteile, insbesondere Methylenharnstoff, in der Zubereitung mit einem temperaturabhängig veränderbaren Feststoffanteil beispielsweise in Form von feinen Partikeln vorliegen. Dies kann beim benetzenden Schichtaufbau der Düngemittelkörner mit der jeweiligen Zubereitung die Porosität der aufgetragenen Schicht beeinflussen.

Eine zweckmäßige Weiterbildung des erfindungsgemäßen Verfahrens wird dadurch bewirkt, dass zwischen dem Aufbringen der Schichten eine Trocknung durchgeführt wird. Dies kann insbesondere hinsichtlich der Formstabilität der Düngemittelkörner sowie der klaren Abgrenzung der einzelnen Schichten der Düngemittelkörner voneinander vorteilhaft sein, also ein Durchmischen der Schichten verhindern. Hierzu können die mit einer Zubereitung benetzten Düngemittelkörner beispielsweise einer Trocknungseinrichtung oder -zone zugeführt werden. In dieser kann das zuvor aufgesprühte Beschichtungsmaterial von einem Lösungsanteil befreit werden beziehungsweise soweit abgekühlt werden, dass eine Lösung beziehungsweise Schmelze des Beschichtungsmaterials, welche beispielsweise mit einem Feststoffanteil gebildet ist, erhärtet. Der erhärtete Film des entstehenden Düngemittelgranulatkorns kann somit eine neue Oberfläche bereitstellen, auf welcher weiteres Beschichtungsmaterial, insbesondere eine methylenharnstoffhaltige Zubereitung besonders verlässlich zum Bilden einer weiteren Schicht der Körner anhaftet.

Besonders bevorzugt ist es nach einer Weiterbildung des erfindungsgemäßen Verfahrens, dass das Beschichten mittels eines Fließbettgranulators durchgeführt wird. Für das Beschichten von Partikeln beziehungsweise Körnern, welche auch als Granulate bezeichnet werden können, kann ein Fließbettgranulator eine besonders effiziente und kontinuierlich arbeitenden Prozessraum bereitstellen. In diesem können sowohl die einzelnen Schichten der Körnern aufgetragen als auch Trocknungsmaßnahmen in einem kontinuierlichen Prozess bereitgestellt werden.

Für eine besonders kleine Durchmesserverteilung der Düngemittelkörner ist es nach dem erfindungsgemäßen Verfahren bevorzugt, dass nach einer Trocknung die Granulate nach ihrer Größe getrennt werden, wobei Granulate minderer Größe für mindestens eine weitere Beschichtung in den Granulator rückgeführt werden. Ein geringer Unterschied in der Größe der einzelnen Düngemittelkörner, also eine relativ ähnliche Kornoberfläche der hergestellten Düngemittelkörner kann das Einstellen einer definierten Nährstoffabgabe von den Düngemittelkörnern an den Boden begünstigen.

Durch das sukzessive Ausbilden von Schichtgranulaten ähnlichen Durchmessers kann sichergestellt werden, dass die jeweiligen Schichten der Düngemittelkörner untereinander vergleichbare Dicken aufweisen. Es kann vorteilhaft sein Düngemittelkörner zu großer oder zu kleiner Größe aus dem Bildungsprozess auszusondern und in zerkleinerter beziehungsweise gelöster Form oder als Schmelze als Bestandteil von Beschichtungsmaterial bereitzustellen. Hierbei kann es zweckmäßig sein nach einer Beschichtung Produkte beziehungsweise Zwischenprodukte, die in ihrem Korndurchmesser von einem theoretischen Normkorn um 60%, zumindest jedoch um 40%, beziehungsweise bevorzugt um 20%, besonders bevorzugt um 10%, abweichen der Verwendung in Beschichtungsmaterial rückzuführen.

Nach einer besonders bevorzugten Weiterbildung der Erfindung ist es vorgesehen, dass die methylenharnstoffhaltigen Zubereitungen als Suspensionen gebildet werden, wobei Methylenharnstoff sowohl mit einem Anteil in der festen Phase der Suspension als auch mit einem Anteil in der flüssigen Phase der Suspension vorgesehen wird. Die Suspensionen können sowohl gelöste beziehungsweise flüssige Anteile an Methylenharnstoff sowie einen Anteil an methylenharnstoffhaltigem Feststoff aufweisen. Hierbei kann beispielsweise die erste Schicht mit einer methylenharnstoffhaltigen Suspension bei einer ersten Temperatur auf dem zu bildenden Düngemittelkorn vorgesehen werden, wobei zum Bilden der zweiten Schicht dieselbe oder zumindest eine gleiche Suspension derselben stofflichen Zusammensetzung bei einer zweiten Temperatur aufgetragen wird. Somit können zumindest zwei der Schichten in jedem Düngemittelkorn aus derselben oder einer gleichartigen Suspension bereitgestellt werden, wodurch die Schichten dieselbe stoffliche Zusammensetzung, insbesondere denselben Anteil an Methylenharnstoff aufweisen. Hinsichtlich der Porosität können sich die erste Schicht und die zweite Schicht im Korn jedoch unterscheiden. Somit kann durch Variation der Temperatur mittels derselben methylenharnstoffhaltigen Zubereitung, insbesondere methylenharnstoffhaltigen Suspension, eine individuelle Porosität des aufgetragenen Beschichtungsmaterials eingestellt werden. Ebenfalls kann es zweckmäßig sein, die Suspension, welche insbesondere zum Bilden der zweiten und/oder einer weiteren Schicht vorgesehen ist, sowohl mit einer zweiten Temperatur als auch mit einer zweiten stofflichen Zusammensetzung gegenüber der Suspension zum Bilden von mindestens der ersten Schicht zu verwenden.

Die Erfindung wird nachfolgend anhand der beigefügten, schematischen Zeichnung weiter erläutert. In der Zeichnung zeigt:
- Fig. 1:: eine schematische Darstellung einer bevorzugten Ausführungsform des erfindungsgemäßen Düngemittelkorns, und
- Fig. 2:: eine schematische Darstellung eines Fließbettgranulators, in welchem eine Beschichtung zu Düngemittelkörnern nach der Erfindung durchgeführt werden kann.

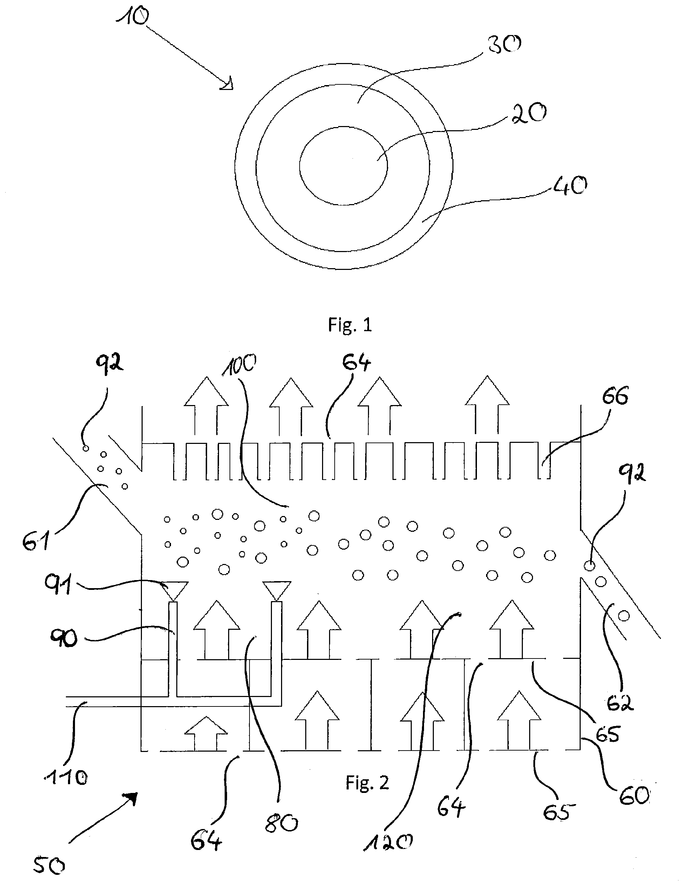

In Figur 1 ist ein Düngemittelkorn 10 in einer Querschnittsansicht dargestellt. Das Düngemittelkorn 10 weist einen Kern 20 auf, um welchen eine innere beziehungsweise untere düngemittelhaltige Schicht 30 und eine äußere beziehungsweise obere düngemittelhaltige Schicht 40 sphärisch angeordnet sind. Der Kern 20 kann aus einem einstückigen Partikel gebildet sein. Vorzugsweise weist er ebenfalls eine Schichtstruktur, insbesondere eine düngemittelhaltige Schichtstruktur auf. Es ist besonders bevorzugt, dass auch der Kern 20 wie bereits die innere Schicht 30 und/oder die äußere Schicht 40 aus metylenharnstoffhaltigem Material gebildet ist. Eine Porosität des Kern kann hierbei mit mindestens einer Porosität der beiden Schichten vergleichbar sein. Er kann jedoch auch eigene Porositäten aufweisen.

Das Düngemittelkorn 10 kann weitere Schichten aufweisen. Diese Schichten können ebenfalls mit einem Anteil an Methylenharnstoff gebildet sein. Das Düngemittelkorn 10 weist insbesondere bei einem Schnitt durch den Mittelpunkt des Korns einen zwiebelartigen Aufbau mit insbesondere konzentrischen Schichten auf.

Die äußere Schicht 40 kann ein besonders hartes Material, insbesondere ein methylenharnstoffhaltiges Beschichtungsmaterial geringer Porosität aufweisen. Dies kann insbesondere hinsichtlich einer geringen Staubbildung vorteilhaft sein, welcher beispielsweise durch Abrieb der aneinander reibenden Düngemittelkörner bei der Herstellung, Lagerung oder der Verwendung beim Austrag der Düngemittelkörner auftreten kann.

Mittels eines Fließbettgranulators ist das erfindungsgemäße Düngemittelkorn, in besonders vorteilhafter Weise herstellbar. In Figur 2 ist eine schematische, seitliche Querschnittsansicht eines zweckmäßigen Fließbettgranulators 50 dargestellt.

Der Fließbettgranulator 50 weist ein Gehäuse 60 auf, an welchem an einer ersten Seite eine Einlassöffnung 61 zum Zuführen von zu beschichtendem Material wie beispielsweise Partikeln vorgesehen ist. Auf einer weiteren Seite des Gehäuses, insbesondere einer gegenüberliegenden Seite ist eine Auslassöffnung 62 für die beschichteten (Zwischen-)Produkte angeordnet. Von einem Bereich unterhalb des Fließbettgranulators 50 wird ein Prozessgasstrom, hier durch Pfeile dargestellt, durch das innere des Gehäuses 60 des Graunulators 50 geleitet. Hierzu weist der Fließbettgranulator 50 zumindest in einem unteren Bereich und in einem oberen Bereich des Gehäuses Öffnungen 63, 64 auf, durch welche ein vertikales Strömen des Prozessgasstroms ermöglicht ist. Hierzu kann ein 65 Boden in einem unteren Bereich des Fließbettgranulators 50 insbesondere gitterartig aufgebaut sein.

In einem ersten Bereich 80 wie er auf der linken Seite im Inneren des Fließbettgranulators 50 dargestellt ist, sind Düsen 90 angeordnet, durch welche das Beschichtungsmaterial 91, insbesondere eine methylenharnstoffhaltige Zubereitung beispielsweise als Suspension in eine Prozesskammer 100 eingeleitet beziehungsweise eingesprüht wird. Hierdurch wird das Beschichtungsmaterial insbesondere in Form von feinen Tröpfchen beziehungsweise als Nebel zur Verfügung gestellt. In einem unteren Bereich des Fließbettgranulators 50 ist mindestens eine Zuführleitung 110 angeordnet, über welche die Düsen 90 mit Druck beaufschlagtem Beschichtungsmaterial 91 versorgt werden. In dem oberen Bereich des Fließbettgranulators 50 sind Gas-Reinigungseinrichtungen 66 angeordnet, durch welche das Prozessgas geleitet wird, um das Prozessgas vor dem Austritt aus dem Fließbettgranulator 50 zu reinigen.

Über die Einlassöffnung 61 werden Partikel 92, welche mit einer Schicht versehen werden sollen in die Prozesskammer 100 des Fließbettgranulators 50 eingeleitet. Die Partikel 92 können hierbei bereits eine oder mehrere Schichten aufweisen, welche mittels desselben Fließbettgranulators 50 und/oder mittels mindestens eines weiteren Granulators auf dem Partikel 92 aufgetragen wurden. Die in die Prozesskammer 100 eingebrachten Partikel 92 werden durch den Prozessgasstrom in der Schwebe gehalten. In diesem fluidisierten Zustand werden die Partikel in dem ersten Bereich 80 des Fließbettgranulators 50 mit dem Beschichtungsmaterial 91, insbesondere mit der methylenharnstoffhaltigen Zubereitung vorzugsweise gleichmäßig benetzt. Hierdurch wachsen die Partikel in ihrem Durchmesser an.

Das Beschichtungsmaterial 91, insbesondere die methylenharnstofhaltige Zubereitung weist hierbei eine definierte Temperatur beim Eintritt in die Prozesskammer 100 auf. Diese ist zum Einstellen einer Porosität in der aufgetragenen und getrockneten Schicht mittels einer entsprechenden Einrichtung, beispielsweise eines Thermostats mit Heizelement (nicht dargestellt), veränderbar. Insbesondere durch Reihenschaltung mehrerer Fließbettgranulatoren oder verschiedener Granulatoren, können in einem kontinuierlichen Prozess Düngemittelkörner erzeugt werden, welche eine Vielzahl von Schichten mit unterschiedlichen Porositäten aufweisen. Hierzu können Granulatoren mit Beschichtungsmaterial 91 beziehungsweise methylenharnstoffhaltiger Zubereitung unterschiedlicher Temperatur vorgesehen werden. Somit lässt sich insbesondere ein Düngemittelkorn bereitstellen, welches in seinem Nährstoffabgabeprofil individuell auf die Notwendigkeiten bei der Versorgung von Pflanzen mit Nährstoffen einstellbar ist.

In einem zweiten Bereich 120, welcher sich an den ersten Bereich 80 anschließt, wird eine Trocknung des mit Beschichtungsmaterial 91 beschichteten Partikels 92 insbesondere mittels des Prozessstroms durchgeführt. Hierzu ist der zweite Bereich 120 ohne Beschichtungsmaterial 91 auftragende Düsen 90 ausgebildet. Für den Trocknungsprozess kann es vorteilhaft sein, dass der Prozessgasstrom in dem zweiten Bereich 120 eine andere Strömungsgeschwindigkeit, eine andere Temperatur und/oder andere Zusammensetzung aufweist wie in dem ersten Bereich 80. Durch den Prozessgasstrom werden die Partikel durch den Fließbettgranulator 50 geleitet und von dem ersten Bereich 80 in den zweiten Bereich 120 transportiert. In dieser Flussrichtung der fluidisierten Partikel ist endseitig die Auslassöffnung 62 nach dem zweiten Bereich 120 angeordnet, durch welche die beschichteten und getrockneten Partikel 92 den Fließbettgranulator 50 verlassen.

An die Auslassöffnung 62 anschließend kann eine Siebanordnung oder Trenneinrichtung vorgesehen sein, welche die beschichteten Partikel 92 nach ihrer Größe trennt. So können beispielsweise Partikel ausreichender Größe einer Abpackstation zugeleitet werden, wobei Partikel minderer Größe in den Fließbettgranulator 50 oder einen weiteren nachgeschalteten Granulator geleitet werden, um dort mit einer weiteren Schicht derselben oder einer anderen Zusammensetzung wie bei der vorherigen Beschichtung beschichtet zu werden. Alternativ können beschichtete Körner zu großer oder kleiner Größe der Verwertung in einem Beschichtungsmaterial zugeführt werden.

## Patentansprüche

1. Düngemittelkorn,
- welches einen Schichtaufbau mit mindestens zwei Schichten aufweist,
- von denen zumindest eine erste Schicht und zumindest eine zweite Schicht mit Methylenharnstoff gebildet sind,
**dadurch gekennzeichnet**
- **dass** die erste Schicht eine erste Porosität und die zweite Schicht eine zweite Porosität aufweist,
- **dass** die erste Porosität unterschiedlich zu der zweiten Porosität ist, und
- **dass** zumindest die beiden Schichten mit der gleichen stofflichen Zusammensetzung gebildet sind.

2. Düngemittelkorn nach Anspruch 1,
**dadurch gekennzeichnet,**
**dass** ein Kern vorgesehen ist, um welchen die Schichten im Wesentlichen sphärisch angeordnet sind.

3. Düngemittelkorn nach einem der Ansprüche 1 bis 2,
**dadurch gekennzeichnet,**
**dass** eine äußere Schicht eine geringere Porosität aufweist als eine innere Schicht.

4. Verfahren zum Herstellen von Düngemittelkörnern,
welche insbesondere nach einem der Ansprüche 1 bis 3 aufgebaut sind,
bei welchem ein Schichtaufbau der Körner mit mindestens zwei Schichten erzeugt wird, von dem mindestens eine erste Schicht und zumindest eine zweite Schicht mit Methylenharnstoff gebildet werden,
**dadurch gekennzeichnet**
**dass** die erste Schicht mit einer ersten Porosität und die zweite Schicht mit einer zweiten Porosität gebildet wird,
**dass** die erste Porosität unterschiedlich zu der zweiten Porosität vorgesehen wird und dass zumindest die erste Schicht und zumindest die zweite Schicht aus methylenharnstoffhaltigen Zubereitungen der gleichen stofflichen Zusammensetzung gebildet werden.

5. Verfahren nach Anspruch 4,
**dadurch gekennzeichnet,**
**dass** die Düngemittelkörner mit einem Kern gebildet werden, um welchen die Schichten im Wesentlichen sphärisch angeordnet werden.

6. Verfahren nach einem der Ansprüche 4 und 5,
**dadurch gekennzeichnet,**
**dass** Schichten aus unterschiedlichen methylenharnstoffhaltigen Zubereitungen gebildet werden.

7. Verfahren nach einem der Ansprüche 4 bis 6,
**dadurch gekennzeichnet,**
**dass** die unterschiedliche Porosität durch eine unterschiedliche Temperatureinstellung beim Beschichten bewirkt wird.

8. Verfahren nach einem der Ansprüche 4 bis 7,
**dadurch gekennzeichnet,**
**dass** zwischen dem Aufbringen der Schichten eine Trocknung durchgeführt wird.

9. Verfahren nach einem der Ansprüche 4 bis 8,
**dadurch gekennzeichnet,**
**dass** das Beschichten mittels eines Fließbettgranulators durchgeführt wird.

10. Verfahren nach einem der Ansprüche 4 bis 9,
**dadurch gekennzeichnet,**
**dass** nach einer Trocknung die Granulate nach ihrer Größe getrennt werden, wobei Granulate minderer Größe für mindestens eine weitere Beschichtung in den Granulator rückgeführt werden.

11. Verfahren nach einem der Ansprüche 4 bis 10,
**dadurch gekennzeichnet,**
**dass** die methylenstoffhaltigen Zubereitungen als Suspensionen gebildet werden, wobei Methylenharnstoff sowohl mit einem Anteil in der festen Phase der Suspension als auch mit einem Anteil in der flüssigen Phase der Suspension vorgesehen wird.

## Claims

1. Fertilizer grain,
- which has a layer construction with at least two layers,
- of which at least a first layer and at least a second layer are formed with methylene urea,
**characterized in that**
- the first layer has a first porosity and the second layer a second porosity,
- **in that** the first porosity is different from the second porosity, and
- **in that** at least the two layers are formed with the same material composition.

2. Fertilizer grain according to claim 1,
**characterized in that**
a core is provided, around which the layers are arranged in a substantially spherical manner.

3. Fertilizer grain according to any one of claims 1 to 2,
**characterized in that**
an external layer has a lower porosity than an internal layer.

4. Method for producing fertilizer grains,
which are in particular constructed according to any one of claims 1 to 3,
in which a layer construction of the grains is produced with at least two layers, of which at least a first layer and at least a second layer are formed with methylene urea,
**characterized in that**
the first layer is formed with a first porosity and the second layer with a second porosity,
**in that** the first porosity is provided to differ from the second porosity and **in that** at least the first layer and at least the second layer are formed of methylene-urea-containing preparations of the same material composition.

5. Method according to claim 4,
**characterized in that**
the fertilizer grains are formed with a core, around which the layers are arranged in a substantially spherical manner.

6. Method according to any one of claims 4 and 5,
**characterized in that**
layers of different methylene-urea-containing preparations are formed.

7. Method according to any one of claims 4 to 6,
**characterized in that**
the different porosity is brought about by a different temperature setting during coating.

8. Method according to any one of claims 4 to 7,
**characterized in that**
between the application of the layers a drying is carried out.

9. Method according to any one of claims 4 to 8,
**characterized in that**
the coating is carried out by means of a fluidized bed granulator.

10. Method according to any one of claims 4 to 9,
**characterized in that**
after drying the granules are separated according to their size, with granules of minor size being returned to the granulator for at least one further coating.

11. Method according to any one of claims 4 to 10,
**characterized in that**
the methylene-urea-containing preparations are formed as suspensions, with methylene urea being provided both with a proportion in the solid phase of the suspension and with a proportion in the liquid phase of the suspension.

## Revendications

1. Granule d'engrais,
- lequel présente une structure stratifiée avec au moins deux couches,
- dont au moins une première couche et au moins une deuxième couche sont formées avec du méthylène-urée,
**caractérisé en ce**
- **que** la première couche présente une première porosité et la deuxième couche présente une deuxième porosité,
- **que** la première porosité est différente par rapport à la deuxième porosité, et
- **qu'**au moins les deux couches sont formées avec la même composition de matériau.

2. Granule d'engrais selon la revendication 1,
**caractérisé en ce**
**qu'**une partie centrale est prévue, autour de laquelle les couches sont disposées de manière sensiblement sphérique.

3. Granule d'engrais selon l'une quelconque des revendications 1 et 2,
**caractérisé en ce**
**qu'**une couche extérieure présente une porosité inférieure à celle d'une couche intérieure.

4. Procédé servant à fabriquer des granules d'engrais,
lesquels sont élaborés en particulier selon l'une quelconque des revendications 1 à 3, dans lequel une structure stratifiée des granules est produite avec au moins deux couches, dont au moins une première couche et au moins une deuxième couche sont formées avec du méthylène-urée,
**caractérisé en ce**
**que** la première couche est formée avec une première porosité et la deuxième couche est formée avec une deuxième porosité,
**que** la première porosité est prévue de manière différente par rapport à la deuxième porosité, et qu'au moins la première couche et au moins la deuxième couche sont formées à partir de préparations contenant du méthylène-urée de la même composition de matériau.

5. Procédé selon la revendication 4,
**caractérisé en ce**
**que** les granules d'engrais sont formés avec une partie centrale, autour de laquelle les couches sont disposées de manière sensiblement sphérique.

6. Procédé selon l'une quelconque des revendications 4 et 5,
**caractérisé en ce**
**que** des couches sont formées à partir de différentes préparations contenant du méthylène-urée.

7. Procédé selon l'une quelconque des revendications 4 à 6,
**caractérisé en ce**
**que** la porosité différente est entraînée par un réglage de température différent lors du revêtement.

8. Procédé selon l'une quelconque des revendications 4 à 7,
**caractérisé en ce**
**qu'**un séchage est effectué entre l'application des couches.

9. Procédé selon l'une quelconque des revendications 4 à 8,
**caractérisé en ce**
**que** le revêtement est effectué au moyen d'un granulateur à lit fluidisé.

10. Procédé selon l'une quelconque des revendications 4 à 9,
**caractérisé en ce**
**qu'**après un séchage, les granulats sont séparés selon leur taille, dans lequel des granulats de moindre taille sont ramenés dans le granulateur pour au moins un autre revêtement.

11. Procédé selon l'une quelconque des revendications 4 à 10,
**caractérisé en ce**
**que** les préparations contenant du méthylène-urée sont formées en tant que suspensions, dans lequel du méthylène-urée est prévu à la fois avec une fraction dans la phase solide de la suspension et avec une fraction dans la phase liquide de la suspension.
